# EUROPÄISCHE PATENTSCHRIFT

(11) **EP 3 700 679 B1**
(45) Veröffentlichungstag und Bekanntmachung des Hinweises auf die Patenterteilung: **20.07.2022**
(21) Anmeldenummer: 18795339.3
(22) Anmeldetag: 19.10.2018
(51) Int. Cl.: F16N 31/02, F16N 7/32, B05B 12/32, B05B 13/02, B05B 12/34

(54) **UMLAUFENDER DICHTUNGSVORHANG ZUR ÖLNEBELABSCHEIDUNG**
CIRCUMFERENTIAL SEALING CURTAIN FOR OIL MIST SEPARATION
RIDEAU PÉRIPHÉRIQUE DE FERMETURE POUR LA SÉPARATION D'UN BROUILLARD D'HUILE

(30) Priorität: 23.10.2017 DE 102017009877
(43) Veröffentlichungstag der Anmeldung: 02.09.2020
(73) Patentinhaber: technotrans SE, 48336 Sassenberg (DE)
(72) Erfinder: ALBERTY, Christian, 48268 Greven (DE); BARUTCUOGLU, Yakup, 59302 Oelde (DE); SCHARF, Alois, 49545 Tecklenburg (DE); KOSCIESZA, Hary, 33178 Borchern (DE)
(74) Vertreter: Müller-Boré & Partner Patentanwälte PartG mbB
(86) Internationale Anmeldenummer: PCT/EP2018/078664
(87) Internationale Veröffentlichungsnummer: WO 2019/081356

(56) Entgegenhaltungen:
- EP-A1- 2 789 397
- EP-A2- 0 060 374
- WO-A2-2010/066224
- JP-U- S5 687 156

## Beschreibung

Aus dem Stand der Technik sind Werkstückbeöler zum kontaktlosen Befetten von Werkstücken bekannt. Diese Werkstückbeöler werden verwendet, um Werkstücke bei Umform- und Stanzprozessen vor der Bearbeitung mit einem Befettungsmittel (Zieh- und Umformölen) zu benetzen, um dadurch die Reibungsverhältnisse (Haft- und Gleitreibung) beim Umformen und Stanzen zielgerichtet zu beeinflussen. Die Befettung ist ein entscheidender Faktor für die Qualität der Stanz- und Umformbauteile. Zudem wird die Lebensdauer der Werkzeuge erhöht.

Die WO 2010/066224 A2 offenbart ein Verfahren und eine Vorrichtung zum Aufbringen eines UV-Drucklackes auf einen in einer Flachform-Rotationsdruckmaschine (Offset) frisch bedruckten, sich bewegenden bahn- oder bogenförmigen Druckträger. Eine Mehrzahl von Sprühdüsen sprühen fortlaufend eine aus UV-Drucklack bestehenden Sprühnebel auf den gedruckten Schön- und/oder Widerdruck. Zur Führung des Sprühstrahls sind zwei sich über die gesamte Breite des Druckträgers erstreckende Leitbleche vorgesehen. An den Innenseiten der beiden der Leitbleches entstandenen größeren UV-Drucklacktropfen (Stör-Tropfen) werden von dort von einer UV-Drucklacktropfensammeleinrichtung übernommen und an eine UV-Drucklacktropfenabführeinrichtung abgegeben. Diese führt die gesammelten UV-Drucklacktropfen (Stör-Tropfen) dann ab.

Die EP 0 060 374 A2 offenbart eine Vorrichtung zum Einölen von band- oder tafelförmigen Blechen aufweisend einen Einlass und einen Auslass für den Blechdurchtritt aufweisenden Gehäuse, in dem quer zur Banddurchlaufrichtung verteilt angeordnete Düsen zum Aufsprühen des Öls und den Düsen in Durchlaufrichtung nachgeordnete Verteilerwalzen vorgesehen sind. Um einen gleichmäßigeren Ölfilm zu erhalten, weist das Gehäuse zwei in Durchlaufrichtung der Bleche hintereinander angeordnete, im Wesentlichen gegeneinander abgedichtete Kammern einerseits für die Düsen und anderseits für die Verteilerwalzen auf.

Die EP 2 789 397 A1 offenbart einen Werkstückbeöler zum Beölen von Werkstücken mit zumindest einer Sprühvorrichtung zum Abgeben von Schmiermittel und zumindest einem Ablenkblech zum Ablenken des Schmiermitteistrahls und/oder Zerstäuben des Schmiermittels sowie einem Auffangmittel zum Sammeln und Abführen von überschüssigem Schmiermittel. Des Weiteren ist ein Verfahren offenbart zum Beölen von Werkstücken vor dem Stanzen und/oder Umformen mit den Schritten: Anordnen zumindest einer Sprühvorrichtung; Besprühen eines Ablenkblechs mit der zumindest einen Sprühvorrichtung; Anordnen des Werkstücks zumindest teilweise im Bereich des abgelenkten Sprühstrahls und/oder zumindest teilweise im Bereich abgelenkter Tröpfchen; und Abführen von überschüssigem Schmiermittel.

Auf dem Markt gibt es verschiedene Befettungsanlagen. Man unterscheidet zwischen Kontaktbeölern und kontaktlosen Befettungsanlagen. Kontaktbeöler sind in der Regel Filzwalzen, Bürstenwalzen oder Rollenbandbeöler. Bei kontaktlosen Befettungsanlagen wird Ziehöl bzw. Umformöl auf das Werkstück aufgesprüht, wobei das Werkstück direkt besprüht wird. Die auf dem Markt befindlichen Anlagen versprühen das Befettungsmittel mit Hilfe von Einstoffdüsen oder Zweistoffdüsen.

Bei der Zweistoffdüsentechnik wird das Befettungsmittel mit Druckluft ausgetrieben. Neben dem eigentlichen Sprühstrahl entsteht auch ein feiner unkontrollierbarer Nebel. Dieser Nebel ist nicht erwünscht und muss in der Regel aufwendig abgesaugt werden. Zudem werden umliegende Oberflächen (Befestigungsrahmen, Gehäuseoberflächen) auf denen sich Tropfen bilden können, mit zusätzlichen Wischern gereinigt bzw. abgestreift. Vorzugsweise werden diese Wischer pneumatisch oder elektromotorisch angetrieben.

Bei der Einstoffdüse ist eine Nebelbildung nahezu nicht vorhanden, da bei der Einstoffdüse das Befettungsmittel ohne zusätzliche Druckluft versprüht wird. Dennoch kann, bedingt durch die hohe Band- bzw. Platinen-Geschwindigkeit und durch Sprühreflektionen, ein sogenannter Schleppölnebel entstehen, welcher sich außerhalb der Sprühkammer niederschlägt und auch innenliegende Gehäuseoberflächen benetzt. Unerwünschte Tropfenbildung ist die Folge. Herabfallende Öltropfen auf Platinen oder Bänder verursachen bei empfindlichen Bauteilen wie z.B. Karosserieaussenhaut-Blechteilen enorme Qualitätseinbußen, weshalb das Herabfallen von Öltropfen in Richtung Förderband unter allen Umständen vermieden werden muss.

Es ist Aufgabe der vorliegenden Erfindung ein Beölungssystem mit einer Vorrichtung vorzuschlagen, bei welcher das Austreten von Ölnebel aus einem Gehäuse eines Beölungssystems verhindert wird.

Die Aufgabe der Erfindung wird durch das Beölungssystem mit den in Anspruch 1 angegebenen Merkmalen gelöst. Bevorzugte Weiterbildungen sind in den abhängigen Ansprüchen wiedergegeben.

Die vorgeschlagene Vorrichtung zum Verhindern des Austretens von Ölnebel aus einem Gehäuse eines Beölungssystems weist ein Gehäuse mit zumindest einer Eingangsöffnung zum Zuführen des zu beölenden Werkstücks, eine Beölungsvorrichtung sowie eine Ausgangsöffnung für das beölte Werkstück auf, wobei die Vorrichtung zumindest im Bereich der Ausgangsöffnung oberhalb des Werkstückes angeordnet ist, sich im Wesentlichen über die Breite der Ausgangsöffnung erstreckt und beweglich ausgebildet ist.

Mit Hilfe der vorgeschlagenen Vorrichtung wird das Austreten des Schleppölnebels aus der Sprühkammer verhindert. Die vorgeschlagene Vorrichtung hat folglich eine abdichtende Funktion für das Gehäuse des Beölungssystems. Die Vorrichtung kann als ein zur Umgebung umlaufender Vorhang in Art einer Barriere mit beispielsweise Bürsten, Schwamm oder Lamellen ausgebildet sein und ist vorzugsweise an den Gehäuseöffnungen, an welchen das zu beölende Werkstück zugeführt oder herausgenommen werden kann, montiert. Die Vorrichtung verhindert ein Austreten des Schleppölnebels aus dem Gehäuse und kann zusätzlich auch die Tropfen, die sich an der Gehäuseinnenseite niederschlagen können, aufnehmen. Das von Bürsten, Schwamm oder Lamellen aufgesaugte Benetzungsmittel bzw. Umformöl kann durch Abrakeln, Auspressen oder Abstreifen an einer vorteilhaften Position des umlaufenden Vorhangs von diesem entfernt werden. Durch das Abrakeln kann verhindert werden, dass die maximale Aufnahmefähigkeit der bürsten-, schwamm- und/oder lamellenartigen Strukturen ausgereizt wird und somit keine weitere Aufnahme von Öl möglich wäre. Das Abrakeln, Auspressen oder Abstreifen kann mit Hilfe eines Abstreifers bzw. einer Rakel erfolgen.

Es versteht sich, dass die Vorrichtung, welche zumindest an der Ausgangsöffnung des Gehäuses der Beölungskammer angeordnet ist, auch an der Eingangsöffnung oder an der Eingangs- und der Ausgangsöffnung der Beölungskammer angeordnet sein kann.

Einer von vielen Vorteilen des umlaufenden Vorhangs ist, dass auf eine aufwendige Absauganlage, welche den Sprühnebel aus dem Gehäuse des Beölungssystems absaugt, verzichtet werden kann. Durch das zusätzliche Abstreifen von umliegenden Oberflächen (Befestigungsrahmen, Gehäuseoberflächen) auf denen sich Tropfen bilden können, wird das Herabfallen von Öltropfen auf das Werkstück verhindert. Hieraus ergeben sich Produktqualitätssteigerungen und Energiekosteneinsparungen.

Erfindungsgemäß ist die Vorrichtung in Breitenrichtung der Ausgangsöffnung beweglich ausgebildet. Vorteilhafterweise ist die Vorrichtung in Breitenerstreckung der Ausgangsöffnung und/oder in Höhenerstreckung der Ausgangsöffnung oder quer zur Ausgangsöffnung beweglich ausgebildet. Die Bewegung der Vorrichtung in Breitenrichtung der Ausgangsöffnung kann einerseits von rechts nach links in einem Sektor und von links nach rechts in einem anderen Sektor der Vorrichtung in Breitenrichtung der Ausgangsöffnung erfolgen und in deren Übergangsbereichen in Höhenerstreckung der Ausgangsöffnung. Eine solche Bewegung ist dem Fachmann beispielsweise von einer Kette einer Kettensäge, welche ein Führungsschwert umläuft, bekannt. Ferner kann die Bewegung auch als Rotation um eine in Breitenrichtung der Ausgangsöffnung verlaufende Achse ausgeführt sein. Mit Breitenrichtung ist eine Richtung quer zur Längsachse des Gehäuses bzw. des Werkstückes bzw. des Transportwegs des Werkstückes in Längsrichtung, sprich quer zu all dem Vorherstehenden, gemeint.

Gemäß einer weiteren bevorzugten Ausführungsform der Erfindung kann die Vorrichtung so ausgebildet sein, dass deren oberer, freier Endbereich das Gehäuse kontaktiert, deren unterer freier Endbereich jedoch vom Werkstück beabstandet ausgebildet ist. Durch diese Konfiguration wird eine maximale Abdichtung des Gehäuses des Beölungssystems angestrebt. Um die angestrebte maximale Abdichtung zu erreichen, werden die Abstände der Vorrichtung zu dem freien Endbereich des Gehäuses derart dimensioniert, dass eine eventuelle Reibung zwischen Vorrichtung und freiem Endbereich des Gehäuses möglichst gering bleibt. In jedem Fall soll jedoch eine ausreichend gute Abdichtung des Gehäuses des Beölungssystems gegenüber dem Außenraum erreicht werden. Weiter ist die Beabstandung der Vorrichtung von dem Werkstück so ausgelegt, dass der Abstand zwischen Werkstück und Vorrichtung möglichst klein bleibt, um ein Austreten von Ölnebel durch den verbleibenden Spalt möglichst gering zu halten, jedoch ausreichend Platz vorhanden ist, um ein Berühren des Werkstückes mit der Vorrichtung zu verhindern. Es soll sichergestellt werden, dass kein Abstreifen von dem auf dem Werkstück befindlichen Öl durch die Vorrichtung erfolgt.

Gemäß einer weiteren vorteilhaften Ausführungsform der Erfindung kann die Vorrichtung als bürsten-, schwamm- und/oder lamellenartige Barriere ausgebildet sein. Die Barriere kann beispielsweise vorhangartig ausgebildet sein, wie beispielsweise aus einer KFZ-Waschanlage bekannt, bei welcher die Barriere die Innenseite und Aussenseite der Waschanlage trennt und Borsten bzw. Lappen aufweist. Es versteht sich, dass die die bürsten-, schwamm- und/oder lamellenartige Barriere bildenden Strukturen derart ausgestaltet sein können, dass die sich an der Oberseite der Vorrichtung durch die Bewegung befindlichen Strukturen nicht in Richtung Werkstück, also in Richtung des Förderbandes durch die Schwerkraft bedingt herabhängen und somit ihre Dichtungsfunktion nicht mehr ordnungsgemäß erfüllen können.

Gemäß einer weiteren zweckmäßigen Ausführungsform der Erfindung ist die Barriere im Querschnitt, d.h. quer zur Längsachse der Barriere, welche in der Eingangsöffnung bzw. Ausgangsöffnung von rechts nach links verläuft, V-förmig ausgebildet. Damit ist gemeint, dass die die Barriere bildenden Strukturen, im Querschnitt von der Längsachse bzw. dem Mittelpunkt der Barriere aus gesehen, sich nach außen bzw. zu deren freien Endbereichen hin, trichter- bzw. fächerförmig aufweiten können. Mithin sind die die Barriere bildenden Strukturen, wiederum im Querschnitt gesehen, zu der Längsachse hin schmäler ausgebildet als an den vorgenannten Endbereichen.

Somit können u.a. herabfallende Öltropfen von den die Barriere bildenden Strukturen aufgenommen und das Herabfallen der Öltropfen auf die Werkstücke verhindert werden.

Gemäß einer weiteren Ausführungsform der Erfindung kann die Querschnittsfläche der die Barriere bildenden Strukturen rechteckförmig, dreieckförmig, kreisförmig, oval oder in jeder anderen möglichen Form ausgebildet sein.

Gemäß einer weiteren Ausführungsform der Erfindung können die die Barriere bildenden Strukturen im Querschnitt derart ausgebildet sein, dass hier ein möglichst breiter Bereich im Querschnitt abgedeckt bzw. ausgebildet wird, um herabfallendes Öl aufzufangen.

Gemäß einer weiteren Ausführungsform der Erfindung kann die Vorrichtung so ausgebildet sein, dass sie mit einem Abstreifer bzw. einer Rakel in Kontakt gebracht wird. Durch das In-Kontakt-Bringen der Vorrichtung mit einem Abstreifer bzw. einer Rakel an einer bevorzugten Stelle kann ein Abrakeln, Auspressen und/oder Abstreifen von Öl, welches von den die Barriere bildenden Strukturen aufgenommen wurde, erreicht werden. Der Abstreifer bzw. die Rakel gemäß dieser Ausführungsform kann verhindern, dass Öl von den die Barriere bildenden Strukturen auf das Werkstück tropft.

Gemäß einer weiteren Ausführungsform der Erfindung kann der Abstreifer bzw. die Rakel mit einem Auffangbecken verbunden sein, sodass das von dem Abstreifer bzw. der Rakel aufgenommene Öl in das Auffangbecken abfließen kann.

Gemäß einer weiteren Ausführungsform der Erfindung kann der Abstreifer bzw. die Rakel an einer zur Befestigung der erfindungsgemäßen Vorrichtung vorgesehenen Haltereinrichtung, dem Gehäuse und/oder dem Rahmen, an der das Gehäuse angeordnet ist, angeordnet bzw. angebracht sein,

Gemäß einer weiteren Ausführungsform der Erfindung kann die Vorrichtung derart ausgebildet sein, dass sie einen ketten- oder zahnriemenförmigen Antrieb aufweist.

Der Antrieb kann aber auch als Antrieb aufweisend Riemen, Gliederbänder, Bänder, Kardanwellen oder als Kardanantrieb oder Spindelantrieb oder ähnlichem ausgebildet sein. Ferner kann der Antrieb auch eine oder mehrere Getriebearten, wie beispielsweise Stirnradgetriebe, Zahnradgetriebe, Reibradgetriebe, Kettengetriebe, Kegelradgetriebe, Schneckengetriebe, Riemengetriebe, Planetengetriebe, Druckmittelgetriebe, Gelenkgetriebe, Kurvengetriebe, Schraubengetriebe oder Zykloidgetriebe oder ähnliches umfassen. Gemäß dieser Ausführungsform werden die jeweiligen Antriebsmittel, beispielsweise die Kette, der Zahnriemen etc. um eine die Antriebsmittel aufnehmende Konstruktion herumgeführt.

Gemäß einer weiteren Ausführungsform der Erfindung kann die Vorrichtung an einer Halteeinrichtung angeordnet sein, welche vorzugsweise auch den Antrieb für die Vorrichtung aufweisen kann. Weiters kann die Halteeinrichtung im Innenraum des Gehäuses angeordnet bzw. festgelegt sein.

Gemäß einer weiteren Ausführungsform der Erfindung kann die Positionierung der erfindungsgemäßen Vorrichtung senkrecht zur Breitenrichtung der Ausgangsöffnung und/oder senkrecht dazu veränderbar bzw. verstellbar ausgebildet sein. Eine diesbezüglich bevorzugte Richtung der variablen Positionierung der Vorrichtung verläuft dabei in Höhenerstreckung der Ausgangsöffnung bzw. senkrecht zu der Förderrichtung des zu beölenden bzw. beölten Werkstückes, d.h. grundsätzlich in vertikaler Richtung. Dadurch kann der Spalt, d.h. der Abstand von dem unteren freien Endbereich der Vorrichtung zu der Oberseite des Werkstückes, zwischen der Vorrichtung und dem Werkstück verändert werden. Eine möglichst hohe Abdichtung des Gehäuses des Beölungssystems kann somit auch bei Werkstücken unterschiedlicher Höhe gewährleistet werden.

Vorzugsweise kann die Positionierung auch während des Betriebs des Beölungssystems veränderbar sein. Dadurch kann eine möglichst hohe Abdichtung des Gehäuses des Beölungssystems auch bei Werkstücken unterschiedlicher Höhe gewährleistet werden sowie ein Berühren der Vorrichtung mit dem Werkstück. Werkstücke mit unterschiedlichen Höhen können somit direkt hintereinander auf das Förderband gelegt und beölt werden, ohne das Beölungssystem zwischenzeitlich ausschalten zu müssen, um die Vorrichtung in eine neue Position bzw. Lage zu bringen.

Gemäß einer weiteren Ausführungsform der Erfindung kann die Vorrichtung auch derart ausgebildet sein, dass der Abstand der Vorrichtung bezüglich des Gehäuses verstellt werden kann. Vorzugsweise kann der Abstand der Vorrichtung bezüglich des Gehäuses auch während des Betriebes des Beölungssystems verstellt werden.

Gemäß einer weiteren Ausführungsform der Erfindung kann auch die Positionierung der Halteeinrichtung entsprechend der Positionierung der zuvor beschriebenen Vorrichtung ausgestaltet sein.

Es versteht sich, dass die Veränderung der Positionierung der Vorrichtung gemäß der zuvor beschriebenen Ausführungsformen relativ zu der Halteeinrichtung und/oder durch die Veränderung der Positionierung der Halteeinrichtung erfolgen kann.

Gemäß einer weiteren Ausführungsform der Erfindung kann das Gehäuse des Beölungssystems innenseitig eine in einer von der Einlassöffnung zur Auslassöffnung verlaufenden Längsrichtung schräg nach unten verlaufende Beölungskammerdecke aufweisen. Dadurch ergibt sich der Vorteil, dass sich Öltropfen, welche sich an der Innenseite der Gehäusedecke niederschlagen, in abfallender Richtung der schräg nach unten verlaufenden Beölungskammerdecke bewegen bzw. abrinnen können, wobei an dieser Stelle die erfindungsgemäße Vorrichtung dann die Tropfen aufnehmen kann.

Das Berühren der Vorrichtung mit dem Gehäuse ist in allen zuvor beschriebenen Ausführungsformen möglich, jedoch nicht zwingend erforderlich.

Die Erfindung wird nachfolgend anhand eines bevorzugten Ausführungsbeispiels näher beschrieben.

Es zeigen:
Figur 1: Eine Querschnittsansicht der erfindungsgemäßen Vorrichtung.
Figur 2: Eine Frontalansicht der Erfindung aus einer Perspektive außerhalb des Gehäuses.
Figur 3: Eine Detailansicht der Erfindung aus der selben Perspektive wie in Figur 2 dargestellt, wobei der an der rechten äußeren Seite der Vorrichtung befindliche Abschnitt vergrößert dargestellt ist.

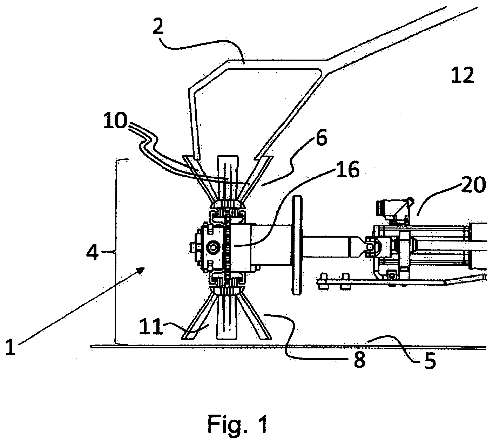

Figur 1 zeigt schematisch im Querschnitt einen Ausgangsbereich eines Beölungssystems für Werkstücke. Nicht dargestellt sind der Eingangsbereich zum Zuführen des Werkstückes in das Gehäuse 2 des Beölungssystems sowie die einzelnen Komponenten, die zur Beölung erforderlich sind. Als Längsrichtung soll die sich von rechts nach links in der Fig. 1 erstreckende Richtung, also die Erstreckung von der nicht dargestellten Eingangsöffnung des Gehäuses 2 zu der dargestellten Ausgangsöffnung 4 des Gehäuses 2 angesehen werden.

Aus der Ausgangsöffnung 4 des Gehäuses 2 wird das beölte Werkstück 5 aus dem Gehäuse 2 herausgeführt. Im Bereich der Ausgangsöffnung 4 ist die erfindungsgemäße Vorrichtung 1 angeordnet, welche als Barriere zwischen dem Innenraum des Gehäuses 2 und dem Bereich außerhalb des Gehäuses 2 dient. Die Vorrichtung 1 weist an ihrem oberen freien Ende 6 sowie an ihrem unteren freien Ende 8, wie in Figur 1 dargestellt, bürsten-, schwamm- oder lamellenartige Strukturen 10 auf. Diese Strukturen 10 berühren an deren oberen freien Ende 6 das Gehäuse 2 und lassen einen Spalt zwischen dem unteren freien Ende 8 und dem Werkstück 5 frei.

In Figur 1 sind die bürsten-, schwamm- oder lamellenartigen Strukturen 10 an einer im Querschnitt halbkreisähnlichen Aufnahmestruktur angeordnet, wobei dünne, seitlich schräg abstehende Strukturen, beispielsweise Borsten, daran angeordnet sind. Weiters kann ein Freiraum 11 zwischen den dünnen Strukturen und einer in der Mitte der halbkreisähnlichen Aufnahmestruktur angeordneten im Querschnitt rechteckigen bürsten-, schwamm- oder lamellenartigen Struktur ausgebildet sein.

Es kann auch auf solche Freiräume verzichtet werden, welche zwischen den dünnen Strukturen und der im Querschnitt rechteckigen Struktur ausgebildet sind. Statt dessen kann der Raum mit weiteren bürsten-, schwamm- oder lamellenartigen Strukturen 10 ausgebildet sein, wodurch sich eine zumindest im Querschnitt durchgängige Struktur, welche an der im Querschnitt dann vorzugsweise halbkreisähnlichen Aufnahmestruktur angeordnet ist, ergibt.

Im gezeigten Beispiel befindet sich innerhalb des Gehäuses 2 in dessen Innenraum 12 die Haltevorrichtung 20, an der ein ketten- oder zahnriemenförmiger Antrieb 16 für die erfindungsgemäße Vorrichtung 1 angeordnet ist.

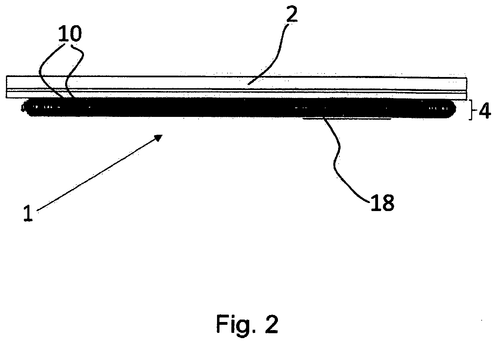

Figur 2 zeigt ein Beispiel der erfindungsgemäßen Vorrichtung 1 in einer Frontalansicht von außen auf die Ausgangsöffnung 4 des Gehäuses 2. Die die Barriere bildenden Strukturen 10 bewegen sich in dieser Darstellung an der Oberseite der Vorrichtung 1 gegenläufig zur Unterseite der Vorrichtung 1, d.h. sie bewegen sich umlaufend um die die Ketten- und/oder Zahnriemen aufnehmende Konstruktion 18. Die Richtung der Rotation kann beliebig sein. Die Vorrichtung 1 ist derart angeordnet, dass die Ausgangsöffnung 4 großteils abgedeckt wird, jedoch ein kleiner Spalt zwischen dem unteren freien Ende 8 der Vorrichtung 1 und dem Werkstück 5 freibleibt. Weiters kann sich die Vorrichtung 1 über die gesamte Breite der Ausgangsöffnung 4 erstrecken als auch darüber hinaus oder auch nur einen Teil der Breite der Ausgangsöffnung 4 abdecken.

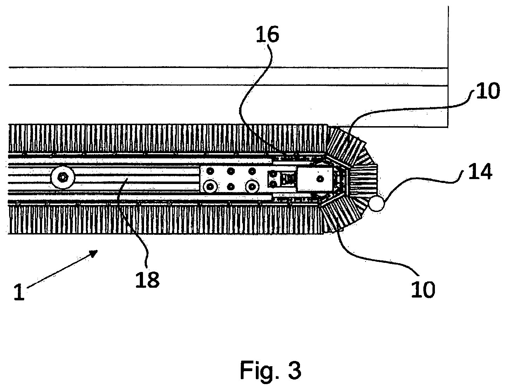

Figur 3 zeigt eine Detailansicht der erfindungsgemäßen Vorrichtung 1 aus der selben Perspektive wie in Figur 2 dargestellt, wobei der sich an der rechten äußeren Seite der Vorrichtung 1 befindliche Abschnitt vergrößert dargestellt ist. Die die Ketten- und/oder Zahnriemen aufnehmende Konstruktion 18 kann Schienen bzw. Ausnehmungen/Aussparungen enthalten, welche zur Führung des ketten- oder zahnriemenförmigen Antriebs 16 dienen kann. Die die Barriere bildenden Strukturen 10 umlaufen die Ketten- und/oder Zahnriemen aufnehmende Konstruktion 18 derart, dass die die Barriere bildenden Strukturen 10 an einem Abstreifer bzw. einer Rakel 14 vorbeigeführt werden können, wodurch das Öl, welches von den die Barriere bildenden Strukturen 10 aufgenommen wurde, teilweise oder komplett durch die Rakel 14 entnommen werden kann. Dadurch wird verhindert, dass die die Barriere bildenden Strukturen 10 mit Öl gesättigt werden und somit kein weiteres Öl aufnehmen können, was zu nicht gewünschtem Herabtropfen von Öl auf das hier nicht dargestellte Werkstück führen würde. Die Rakel 14 kann weiters mit einem in Figur 3 nicht gezeigten Auffangbecken verbunden sein, wodurch das Öl beispielsweise für die Beölung wiederverwendet werden kann. Die Rakel 14 kann außerhalb des Gehäuses 2, an dem Gehäuse 2 selbst, an der die Ketten- und/oder Zahnriemen aufnehmenden Konstruktion 18, an der Halteeinrichtung 20 oder an jedem anderen Teil des Beölungssystems oder der Vorrichtung 1 angebracht sein.

### Bezugszeichenliste

- 2: Gehäuse
- 4: Ausgangsöffnung
- 6: oberes freies Ende der Vorrichtung
- 8: unteres freies Ende der Vorrichtung
- 10: die Barriere bildenden Strukturen
- 11: Freiraum
- 12: Innenraum des Gehäuses 2
- 14: Abstreifer bzw. Rakel
- 16: ketten- oder zahnriemenförmiger Antrieb
- 18: Ketten- und/oder Zahnriemen aufnehmende Konstruktion
- 20: Halteeinrichtung
- 22: Beölungskammerdecke

## Patentansprüche

1. Beölungssystem aufweisend ein Gehäuse (2) und eine Vorrichtung (1) zum Verhindern des Austretens von Ölnebel aus dem Gehäuse (2) des Beölungssytems, wobei das Gehäuse (2) zumindest eine Eingangsöffnung zum Zuführen des zu beölenden Werkstückes, eine Beölungsvorrichtung sowie eine Ausgangsöffnung (4) für das beölte Werkstück aufweist,
**dadurch gekennzeichnet, dass**
die Vorrichtung (1) zumindest im Bereich der Ausgangsöffnung (4) oberhalb des Werkstückes angeordnet ist, sich im Wesentlichen über die Breite der Ausgangsöffnung (4) erstreckt und in einer Breitenrichtung der Ausgangsöffnung (4) beweglich ausgebildet ist.

2. Beölungssystem gemäß Anspruch 1, wobei die Vorrichtung (1) in einer Höhenrichtung der Ausgangsöffnung (4) beweglich ausgebildet ist.

3. Beölungssystem gemäß Anspruch 1 oder 2, wobei die Vorrichtung (1) so ausgebildet ist, dass deren oberer, freier Endbereich (6) das Gehäuse (2) kontaktiert, deren unterer freier Endbereich (8) jedoch vom Werkstück beabstandet ausgebildet ist.

4. Beölungssystem nach einem oder mehreren der Ansprüche 1 bis 3, wobei die Vorrichtung (1) als bürsten-, schwamm- und/oder lamellenartige Barriere ausgebildet ist.

5. Beölungssystem gemäß Anspruch 4, wobei die Barriere im Querschnitt V-förmig ausgebildet ist.

6. Beölungssystem gemäß einem oder mehreren der Ansprüche 1 bis 5, wobei die Vorrichtung (1) so ausgebildet ist, um mit einem Abstreifer (14) bzw. einer Rakel (14) in Kontakt gebracht zu werden.

7. Beölungssystem gemäß einem oder mehreren der Ansprüche 1 bis 6, wobei die Vorrichtung (1) einen ketten- oder zahnriemenförmigen Antrieb (16) aufweist.

8. Beölungssystem gemäß einem oder mehreren der Ansprüche 1 bis 7, wobei die Vorrichtung (1) an einer Halteeinrichtung (20) angeordnet ist, die vorzugsweise den Antrieb für die Vorrichtung (1) aufweist.

9. Beölungssystem gemäß einem oder mehreren der Ansprüche 1 bis 8, wobei die Positionierung der Vorrichtung (1) senkrecht zu einer Breitenrichtung der Ausgangsöffnung (4) veränderbar ausgebildet ist.

10. Beölungssystem gemäß Anspruch 8 oder 9, wobei die Positionierung der Halteeinrichtung (20) senkrecht zu einer Breitenrichtung der Ausgangsöffnung (4) veränderbar ausgebildet ist.

## Claims

1. Oiling system, comprising a housing (2) and a device (1) for preventing the escape of oil mist from the housing (2) of the oiling system, wherein the housing (2) comprises at least one inlet opening for supplying the workpiece to be oiled, an oiling device, and an outlet opening (4) for the oiled workpiece,
**characterised in that**
the device (1) is arranged above the workpiece at least in the region of the outlet opening (4), extends substantially over the width of the outlet opening (4), and is configured so as to be movable in a width direction of the outlet opening (4).

2. Oiling system according to claim 1, wherein the device (1) is configured so as to be movable in a height direction of the outlet opening (4).

3. Oiling system according to either claim 1 or claim 2, wherein the device (1) is configured such that the upper free end region (6) thereof contacts the housing (2), but the lower free end region (8) thereof is configured so as to be spaced apart from the workpiece.

4. Oiling system according to one or more of claims 1 to 3, wherein the device (1) is configured as a brush-like, sponge-like and/or lamellar barrier.

5. Oiling system according to claim 4, wherein the barrier is configured so as to be V-shaped in cross section.

6. Oiling system according to one or more of claims 1 to 5, wherein the device (1) is configured so as to be brought into contact with a wiper (14) or a squeegee (14).

7. Oiling system according to one or more of claims 1 to 6, wherein the device (1) comprises a chain-like or toothed belt-like drive (16).

8. Oiling system according to one or more of claims 1 to 7 wherein the device (1) is arranged on a retaining means (20) which preferably comprises the drive for the device (1).

9. Oiling system according to one or more of claims 1 to 8, wherein the positioning of the device (1) is configured so as to be variable, perpendicularly to a width direction of the outlet opening (4).

10. Oiling system according to either claim 8 or claim 9, wherein the positioning of the retaining means (20) is configured so as to be variable, perpendicularly to a width direction of the outlet opening (4).

## Revendications

1. Système de lubrification présentant un boîtier (2) et un dispositif (1) pour empêcher qu'un brouillard d'huile ne sorte du boîtier (2) du système de lubrification, dans lequel le boîtier (2) présente au moins une ouverture d'entrée pour amener la pièce à lubrifier, un dispositif de lubrification ainsi qu'une ouverture de sortie (4) pour la pièce lubrifiée,
**caractérisé en ce que**
le dispositif (1) est disposé au-dessus de la pièce au moins dans la zone de l'ouverture de sortie (4), s'étend sensiblement sur la largeur de l'ouverture de sortie (4) et est réalisé de manière mobile dans le sens d'une largeur de l'ouverture de sortie (4).

2. Système de lubrification selon la revendication 1, dans lequel le dispositif (1) est réalisé de manière mobile dans le sens de la hauteur de l'ouverture de sortie (4).

3. Système de lubrification selon la revendication 1 ou 2, dans lequel le dispositif (1) est réalisé de telle sorte que sa zone d'extrémité (6) supérieure libre établit un contact avec le boîtier (2), dont la zone d'extrémité libre inférieure (8) est réalisée toutefois à distance de la pièce.

4. Système de lubrification selon l'une quelconque ou plusieurs des revendications 1 à 3, dans lequel le dispositif (1) est réalisé en tant que barrière de type brosse, de type éponge et/ou de type lamelle.

5. Système de lubrification selon la revendication 4, dans lequel la barrière est réalisée en forme de V dans la section transversale.

6. Système de lubrification selon l'une quelconque ou plusieurs des revendications 1 à 5, dans lequel le dispositif (1) est réalisé de manière à être amené en contact avec un racloir (14) ou un racleur (14).

7. Système de lubrification selon l'une quelconque ou plusieurs des revendications 1 à 6, dans lequel le dispositif (1) présente un entraînement (16) en forme de chaîne ou de courroie dentée.

8. Système de lubrification selon l'une quelconque ou plusieurs des revendications 1 à 7, dans lequel le dispositif (1) est disposé sur un système de maintien (20), qui présente de préférence l'entraînement pour le dispositif (1).

9. Système de lubrification selon l'une quelconque ou plusieurs des revendications 1 à 8, dans lequel le positionnement du dispositif (1) de manière perpendiculaire par rapport au sens d'une largeur de l'ouverture de sortie (4) est réalisé de manière variable.

10. Système de lubrification selon la revendication 8 ou 9, dans lequel le positionnement du système de maintien (20) de manière perpendiculaire par rapport au sens d'une largeur de l'ouverture de sortie (4) est réalisé de manière variable.
